Europäisches Patentamt

European Patent Office

Office européen des brevets

(19)

(11) Numéro de publication: 0 385 844
A1

# DEMANDE DE BREVET EUROPEEN

(21) Numéro de dépôt: 90400530.3

(22) Date de dépôt: 26.02.90

(51) Int. Cl.⁵: H05B 37/02

(30) Priorité: 27.02.89 FR 8902485

(43) Date de publication de la demande:
05.09.90 Bulletin 90/36

(84) Etats contractants désignés:
BE DE ES GB

(71) Demandeur: TERRITOIRE DE LA POLYNESIE
FRANCAISE REPRESENTE PAR LE MINISTRE
DE LA MER, DE L'EQUIPEMENT, DE
L'ENERGIE ET DES MINES
B.P. 2551 Papeete
Polynesie Française(FR)

Demandeur: COMMISSARIAT A L'ENERGIE
ATOMIQUE
31/33, rue de la Fédération
F-75015 Paris(FR)

Demandeur: AGENCE FRANCAISE POUR LA
MAITRISE DE L'ENERGIE
27, rue Louis Vicat
F-75015 Paris(FR)

(72) Inventeur: Pouyanne, Marc
BP 6011 Aéroport de FAAA
Tahiti (Polynesie Francaise)(FR)
Inventeur: Mace, Roger
345 Avenue de la Libération, Mouroux
F-77120 Coulommiers(FR)
Inventeur: Blanc, Jean-Loup
Chemin Fontaine de Laurent
F-13880 Velaux(FR)

(74) Mandataire: Mongrédien, André et al
c/o BREVATOME 25, rue de Ponthieu
F-75008 Paris(FR)

(54) Dispositif de balisage lumineux d'une piste d'atterrissage.

(57) Dispositif de balisage lumineux pour piste d'atterrissage comprenant au moins une boucle (16, 17, 18) de lampes (10) reliées en série. Cette boucle est alimentée par une pile solaire (12) par l'intermédiaire d'un circuit de régulation (20) assurant le préchauffage des lampes (10), leur mise sous tension et par ailleurs maintenant un courant circulant dans la boucle adapté au fonctionnement de la boucle.

FIG. 1

## DISPOSITIF DE BALISAGE LUMINEUX D'UNE PISTE D'ATTERRISSAGE.

La présente invention a pour objet un dispositif de balisage lumineux d'une piste d'atterrissage. Elle s'applique notamment aux pistes d'atterrissage peu fréquentées, situées dans des régions fortement ensoleillées.

Les aéroports importants adaptés à un trafic intense sont tous munis de sources d'alimentation électriques autonomes permettant le fonctionnement du balisage des pistes à volonté ainsi que la bonne marche des équipements électriques internes.

De manière usuelle, les petits aéroports qui ne sont pas soumis à un trafic régulier, disposent de groupes électrogènes fournissant l'énergie électrique utile à l'activité quotidienne, mais aussi le cas échéant, permettant l'allumage du balisage lumineux de la piste.

Le balisage lumineux consomme énormément d'énergie et conduit à un surdimensionnement des groupes électrogènes qui, de ce fait, sont sous employés la plupart du temps. La consommation électrique dépend évidemment du nombre de lampes (et de leur puissance) que contient un balisage. Ce nombre de lampes dépend quant à lui de la longueur de la piste d'atterrissage.

Par exemple, une puissance de 20 kW est généralement disponible alors que 8 kW seulement sont nécessaires au fonctionnement quotidien de l'aéroport. Ce surdimensionnement coûte d'autant plus cher que les atterrissages sont rares, comme c'est souvent le cas pour de nombreuses pistes de brousse en Afrique ou encore dans certaines îles de Polynésie où le trafic se réduit aux évacuations sanitaires.

Le but de la présente invention est d'utiliser l'énergie solaire dans les aéroports de faible trafic et situés dans des régions de fort ensoleillement.

De manière précise, l'invention concerne un dispositif de balisage lumineux comprenant au moins une boucle de lampes reliées en série, ces boucles étant connectées à une source d'alimentation électrique.

Cette source d'alimentation est constituée par une pile solaire délivrant sur une sortie un signal continu, et un circuit de régulation par boucle de lampes. Ce circuit de régulation est connecté à ladite pile et à la boucle de lampes lui étant associée. Ce circuit assure un préchauffage et une mise sous tension des lampes de la boucle et par ailleurs maintient un courant circulant dans la boucle, adapté au fonctionnement de la boucle.

L'utilisation d'une pile solaire implique un fonctionnement en régime électrique continu.

Dans une variante de réalisation, le dispositif selon l'invention comprend un circuit de basculement apte à être relié à une source d'alimentation électrique alternative. Ce circuit est connecté à la pile solaire et à chacun des circuits de régulation. En cas de mauvais fonctionnement de la pile, il permet l'utilisation d'une source d'alimentation alternative conventionnelle.

Dans une variante de réalisation, pour maintenir le courant circulant dans une boucle, le circuit de régulation comporte un circuit de comparaison de l'intensité du courant avec une valeur-étalon fixée, ce circuit de comparaison minimisant tout écart entre l'intensité et la valeur-étalon par ajout de résistances connectées en série avec la boucle de lampes reliée audit circuit de régulation.

Dans une boucle de lampes balisant une piste d'atterrissage, le claquage d'une lampe de la boucle peut entraîner une surtension aux bornes des autres lampes qui claquent en série.

La régulation du courant dans la boucle, par l'ajout d'autant de résistances de valeur équivalente à la résistance interne d'une lampe que de lampes hors d'usage, permet de pallier cet inconvient en équilibrant en permanence l'intensité du courant débité.

Les caractéristiques et avantages de l'ivention apparaîtront mieux après la description qui suit donnée à titre explicatif et nullement limitatif. Cette description se réfère à des dessins annexés sur lesquels :

- la figure 1 représente schématiquement un dispositif selon l'invention,

- la figure 2 représente schématiquement un circuit de comparaison inclus dans un circuit de régulation d'un dispositif conforme à l'invention,

- la figure 3 représente schématiquement le détail d'une pile solaire utilisée dans un dispositif selon l'invention.

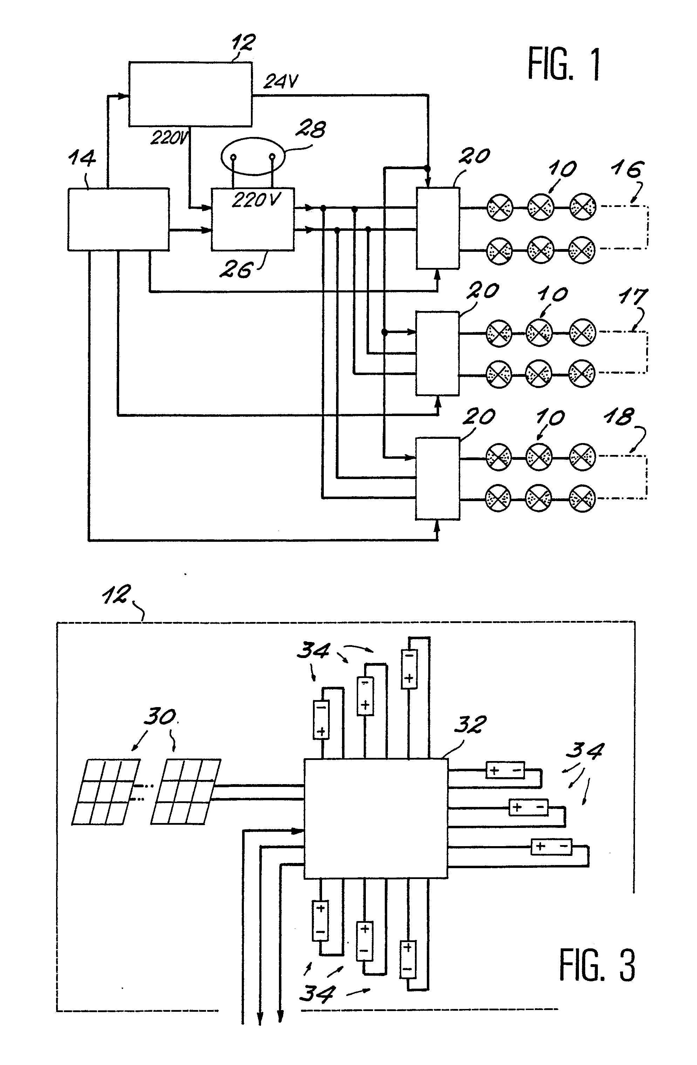

La figure 1 représente schématiquement un dispositif selon l'invention. L'énergie autorisant l'allumage des lampes 10 nécessaires au balisage d'une piste d'atterrissage est fournie par une pile solaire 12. Le détail de la pile solaire 12 sera décrit plus loin.

L'ensemble du dispositif selon l'invention est commandé à partir d'un circuit de commande 14. Ce circuit 14 commande la mise en service de la ou des boucles de lampes délimitant la piste de manière à la baliser.

Dans le cas particulier représenté sur la figure 1, le balisage est composé de deux boucles 16, 17. Chacune de ces boucles 16, 17 comporte 35 feux munis de verrines par exemple, chacun de ces feux est équipé d'une lampe 10 de 6 V et consomme 6 W, par exemple.

Les lampes 10 d'une boucle délimitent la piste et sont reliées en série les unes aux autres. Les lampes de la boucle 16 alternent avec les lampes de la boucle 17. De cette manière si une boucle de lampes tombe en panne, la piste est toujours éclairée par la boucle restant allumée. L'écart entre les lampes 10 est régi par les normes en vigueur. La longueur de la piste définit le nombre de lampes 10.

Une troisième boucle 18 comporte huit feux indicateurs de pente visuelle (PAPI en terminologie anglo-saxonne abrégée, utilisée de manière usuelle) et une manche à vent lumineuse. Les feux indicateurs de pente visuelle sont équipés de lampes 10 de 24 V et consommant 70 W, par exemple. Chaque feu composant une boucle est relié en parallèle à un relais (non représenté) de court-circuitage. En cas de non fonctionnement d'une lampe, le relais assure la continuité du branchement avec les autres lampes d'une boucle.

Chacune des boucles 16, 17, 18 est reliée à un circuit de régulation 20. Commandé par le circuit de commande 14, le circuit de régulation 20 assure le préchauffage des lampes 10, puis leur mise sous tension de fonctionnement. Afin d'éviter tout claquage des lampes causé par des surtensions, l'intensité du courant circulant dans la boucle est maintenue dans une fourchette fixée.

Le circuit de régulation 20 assure la détection d'une boucle ouverte et coupe automatiquement l'alimentation de la boucle si l'absence de courant dure plus d'un laps de temps déterminé, une seconde par exemple. Cette fonction permet la protection d'éventuels intervenants sur la boucle (pour assurer la maintenance par exemple).

Le circuit de régulation 20 compense automatiquement toute perte de charge (due au claquage d'une lampe par exemple) survenant dans une boucle.

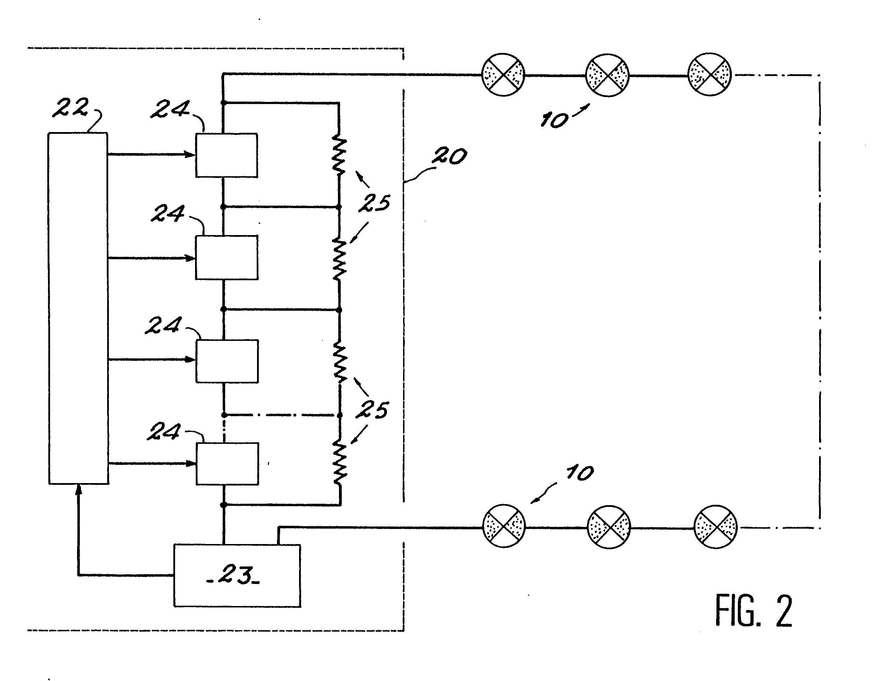

La figure 2 représente schématiquement un circuit de comparaison inclus dans un circuit de régulation 20. Ce circuit de comparaison comprend un comparateur 22 connecté à des relais 24. Ces derniers comportent chacun un interrupteur (non représenté) relié en parallèle à une résistance 25 de valeur égale à la résistance interne des lampes 10 de la boucle. Les cellules formées chacune par un relais 24 et une résistance 25 sont connectées en série entre elles. Elles sont reliées en série avec la boucle de lampes 10.

La boucle de lampes 10 munie des cellules reliées en série est connectée au reste du circuit de régulation symbolisé par 23.

Si une lampe 10 est hors d'usage, le courant dans la boucle augmente. Ce courant est comparé à une valeur de référence par le comparateur 22 qui commande l'ouverture ou la fermeture d'un relais 24 de manière à abaisser le courant à sa valeur nominale de fonctionnement (1A environ pour les boucles 16, 17, 3A environ pour la boucle 18, par exemple).

Les circuits de régulation 20 comprennent en outre un système de localisation d'un défaut d'isolement sur la boucle. Ce système repose sur un pont de Wheatstone dont une première branche est constituée par la boucle de lampes 10 et une seconde branche par deux résistances ajustables (pour former un galvanomètre à zéro central). La localisation d'un défaut d'isolement est possible grâce à un étalonnage préalable.

Sur la figure 1, on voit encore que la pile solaire 12 est connectée à un circuit de basculement 26. Ce circuit 26 est relié à une source d'alimentation électrique alternative 28 qui n'est utilisée qu'en cas de mauvais fonctionnement (ou de décharge complète) de la pile solaire 12.

Si la tension délivrée par la pile solaire 12 n'est pas suffisante pour la charge des lampes 10, le circuit de basculement 26 déconnecte la pile 12 et met en charge la source 28. Ce basculement peut aussi être effectué à partir du circuit de commande 14.

Ce mode de fonctionnement implique que les circuits de régulation 20 soient aptes à recevoir un courant alternatif ou continu.

Si la source d'alimentation alternative 28 débite du 220 V, la pile devra débiter elle aussi 220 V afin d'assurer la compatibilité.

La figure 3 représente une pile solaire 12 apte à être utilisée dans un dispositif conforme à l'invention. Bien entendu, la capacité de cette pile 12 est fonction de la situation géographique de l'installation et d'autre part de sa fréquence d'utilisation.

La pile 12 comprend par exemple six panneaux solaires 30 en série et qui peuvent être du modèle BPX400 fabriqué par la société Photowatt. Les panneaux solaires 30 sont reliés à un circuit de commutation 32 qui permet la charge en parallèle de neuf jeux de douze batteries 34 délivrant chacun 24 V, par exemple. Pour la décharge, les piles sont connectées en série afin de délivrer du 220 V (à 4 V près). Ces batteries peuvent délivrer jusqu'à 50 Ah, par exemple.

La charge et la décharge sont commandées par le circuit de commande 14.

Le circuit de commutation 32 permet aussi de délivrer sur une sortie, une tension de 24 V qui alimente les circuits de régulation 20 (alimentation de tous les circuits actifs du circuit de régulation 20 tel le comparateur 22, par exemple).

Lors de la mise en service du dispositif selon l'invention, un test d'isolement est commandé par le circuit de commande 14. Ce test est effectué à partir du circuit de basculement 26.

Un dispositif selon l'invention permet donc bien d'éviter le gaspillage énergétique, par l'utilisation de l'énergie solaire pour charger des batteries. La source d'alimentation du balisage permet aussi de fournir l'énergie nécessaire à l'activité quotidienne de l'aéroport (radio, éclairage, ...). A titre indicatif et non limitatif, un dispositif selon l'invention tel que décrit précédemment permet l'atterrissage ou le décollage d'un avion par jour ou de quatre avions tous les trois jours.

**Revendications**

1. Dispositif de balisage lumineux comprenant au moins une boucle de lampes (10) reliées en série, cette boucle étant connectée à une source d'alimentation électrique, caractérisé en ce que la source d'alimentation électrique comporte :
- une pile solaire (12) délivrant sur une sortie un signal électrique continu,
- un circuit de régulation (20) par boucle de lampes (10), ce circuit (20) étant connecté à ladite pile (12) et la boucle de lampes (10) lui étant associée, ce circuit (20) assurant un préchauffage et une mise sous tension des lampes (10) de la boucle, et par ailleurs maintenant un courant circulant dans la boucle adapté au fonctionnement de la boucle.

2. Dispositif de balisage selon la revendication 1, caractérisé en ce qu'il comprend un circuit de basculement (26) apte à être relié à une source d'alimentation électrique alternative (28), ce circuit étant connecté à la pile solaire (12) et au circuit de régulation (20) de chaque boucle de lampes (10), ce circuit (26) permettant de déconnecter la pile solaire (12) et de fournir une alimentation électrique alternative au circuit de régulation (20) de chaque boucle de lampes (10).

3. Dispositif de balisage selon la revendication 1, caractérisé en ce que pour maintenir le courant circulant dans une boucle, le circuit de régulation (20) comporte un circuit de comparaison de l'intensité du courant avec une valeur étalon fixée, ce circuit de comparaison minimisant tout écart entre l'intensité et la valeur-étalon par ajout de résistances (25) connectées en série avec la boucle de lampes (10) reliée audit circuit de régulation (20).

FIG. 1

FIG. 3

FIG. 2

EP 0 385 844 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2509111 (ROQUES)<br>* le document en entier *<br>--- | 1 | H05B37/02 |
| A | FR-A-2494537 (METRICH ET JOSEPH)<br>* le document en entier *<br>--- | 1 | |
| A | FR-A-2602115 (ESTIVAL)<br>* page 3, ligne 27 - page 4, ligne 3; figure 2 *<br>--- | 1, 3 | |
| A | DE-B-1044964 (LICENTIA)<br>* colonne 4, ligne 54 - colonne 5, ligne 31; figure 1 *<br>--- | 1, 3 | |
| A | FR-A-2195022 (COMETA)<br>----- | | |

| DOMAINES TECHNIQUES RECHERCHES (Int. Cl.5 ) |
|---|
| H05B<br>H02J<br>G08G<br>B64F<br>G05F |

Le présent rapport a été établi pour toutes les revendications

| Lieu de la recherche | Date d'achèvement de la recherche | Examinateur |
|---|---|---|
| LA HAYE | 01 JUIN 1990 | SPEISER P. |